# EUROPÄISCHE PATENTANMELDUNG

(11) **EP 1 533 199 A1**
(43) Veröffentlichungstag der Anmeldung: **25.05.2005**
(21) Anmeldenummer: 04025678.6
(22) Anmeldetag: 28.10.2004
(51) Int. Cl.: B60R 21/20

(54) **Gassackmodul**

(30) Priorität: 20.11.2003 DE 20317961 U
(71) Anmelder: TRW Automotive Safety Systems GmbH, 63743 Aschaffenburg (DE)
(72) Erfinder: Schneider, Michael, Dr., 63834 Sulzbach (DE)
(74) Vertreter: Kitzhofer, Thomas, Dipl.-Ing.

(57) **Zusammenfassung**

Ein Gassackmodul hat einen Gassack (16), einen Gasgenerator (20), einen Haltering (28) und einen Generatorträger (14), an dem der Gassack (16) und der Gasgenerator (20) mittels des Halterings (28) befestigt sind. Der Haltering (28) weist wenigstens ein erstes Rastelement (38) zur Schaffung einer Rastverbindung zwischen Haltering (28) und Generatorträger (14) auf und wenigstens ein zweites Rastelement (46) zur Schaffung einer Rastverbindung zwischen Gasgenerator (20) und Haltering (28).

## Beschreibung

Die Erfindung betrifft ein Gassackmodul.

Bei der Befestigung eines Gasgenerators und eines Gassacks an einem Generatorträger eines Fahrergassackmoduls wird oft ein sogenannter Halte- oder Retainerring eingesetzt, der einen Rand einer Einströmöffnung des Gassacks zwischen sich und dem Generatorträger klemmt und gleichzeitig, z.B. auch über eine Klemmung, den Gasgenerator am Generatorträger fixiert. Die Verbindung zwischen Generatorträger, Gasgenerator und Haltering geschieht konventionell über eine Schrauben-Muttemverbindung. Dieser Montageschritt ist sehr zeitaufwendig.

Durch das hier vorgeschlagene Gassackmodul läßt sich der Montageaufwand beim Zusammenbau des Gassackmoduls stark reduzieren.

Dies wird dadurch erreicht, daß bei einem Gassackmodul mit einem Gassack, einem Gasgenerator, einem Haltering und einem Generatorträger, an dem der Gassack und der Gasgenerator mittels des Halterings befestigt sind, vorgesehen ist, daß der Haltering wenigstens ein erstes Rastelement zur Schaffung einer Rastverbindung zwischen Haltering und Generatorträger und wenigstens ein zweites Rastelement zur Schaffung einer Rastverbindung zwischen Gasgenerator und Haltering aufweist. Sowohl der Gasgenerator als auch der Haltering lassen sich so rein über Rastverbindungen befestigen, was gegenüber einer Schrauben-Mutternverbindung eine erhebliche Ersparnis an Montagezeit bringt. Es ist möglich, zunächst den Gasgenerator über das wenigstens eine zweite Rastelement am Haltering zu fixieren und dann die Baugruppe aus Gasgenerator und Haltering am Generatorträger zu verrasten, wobei in diesem Arbeitsschritt auch der Gassack befestigt wird. Der Generatorträger kann Teil eines Modulgehäuses sein, daß das Gassackmodul nach außen abschließt und dient bevorzugt auch dazu, das gesamte Gassackmodul am Fahrzeug zu befestigen, z.B. direkt an einem Skelett eines Lenkrads. Der Generatorträger ist ein von der Abdeckkappe separates Bauteil, und der Haltering ist ein vom Generatorträger separates Bauteil.

Bevorzugt weist der Haltering einen Klemmabschnitt auf, und ein Rand der Einströmöffnung des Gassacks liegt zwischen dem Klemmabschnitt und dem Generatorträger. Um den Rand der Einströmöffnung über seinen gesamten Umfang gleichmäßig und gasdicht zu klemmen, kann sich der Klemmabschnitt umfangsmäßig vollständig um den Haltering herum ziehen, also ringförmig sein.

Unter "ringförmig" oder "Ring" wird hier nicht nur ein kreisringförmiges Bauteil verstanden, sondern auch andere geschlossene Formen mit einer innen liegenden Ausnehmung.

In einer Axialrichtung des Gassackmoduls gesehen sind bevorzugt ein Flansch des Gasgenerators, der Klemmabschnitt, der Rand der Einströmöffnung sowie ein Abschnitt des Generatorträgers hintereinander angeordnet. Dies bietet den Vorteil, daß die Schubkraft, die bei der Aktivierung des Gasgenerators durch das aus diesem ausströmende Gas erzeugt wird, über den Klemmabschnitt des Halterings auf den Rand der Einströmöffnung des Gassacks übertragen werden kann und so der Gassack während des Aufblasens durch den Druck in Richtung Generatorträger zusätzlich fixiert wird.

Hierbei kann ein Rand des Flansches des Gasgenerators radial einwärts des Klemmabschnitts liegen. Auch bei dieser Anordnung läßt sich die vom Gasgenerator ausgeübte Kraft in ein Klemmung des Gassacks umsetzen.

Wenn der Gasgenerator vom Haltering umgeben ist, ermöglicht dies eine in Radialrichtung kompakte Bauweise des Halterings und damit eine gute Kraftübertragung.

Das erste Rastelement greift bevorzugt am Rand eines Flansches des Gasgenerators an, so daß ein konventioneller Gasgenerator verwendet werden kann.

Um den Haltering unter Vorspannung am Generatorträger zu fixieren, ist bevorzugt vorgesehen, daß das erste Rastelement eine abgeschrägte Anlagefläche aufweist, an der der Generatorträger im montierten Zustand anliegt. Dies kann z.B. Klappergeräusche vermeiden.

Bevorzugt weist das zweite Rastelement eine abgeschrägte Anlagefläche auf, an der der Gasgenerator im montierten Zustand anliegt, um den Gasgenerator unter Vorspannung am Haltering zu fixieren.

Das erste und/oder das zweite Rastelement sind vorzugsweise einstückig mit dem Haltering ausgebildet.

Die Zahl der ersten und zweiten Rastelemente kann je nach Gestaltung des Gassackmoduls variieren, vorzugsweise sind aber wenigstens drei erste Rastelemente bzw. wenigstens drei zweite Rastelemente vorgesehen.

Jedes der ersten und/oder der zweiten Rastelemente kann als Haken ausgebildet sein.

In einer Ausführungsform der Erfindung ist der Haltering in einer Öffnung im Generatorträger angeordnet und von einem Rand der Öffnung umgeben, wobei das erste Rastelement am Rand der Öffnung angreift.

Der Generatorträger kann in einer weiteren Ausführungsform der Erfindung ein Gehäuse mit einer Bodenplatte sein. Hier ist bevorzugt die Bodenplatte im Bereich des Gasgenerators mit einer Öffnung versehen und ein Rand der Öffnung wenigstens abschnittsweise umgebogen, so daß eine zum ersten Rastelement komplementäre Anlagefläche geschaffen ist. Diese Ausführung bietet sich vor allem bei Generatorträgem mit einer Bodenplatte aus einem Metallblech an. Der Generatorträger kann über weitere Befestigungsmittel direkt am Fahrzeug, z.B. an einem Lenkradskelett, befestigt sein.

Weitere Merkmale und Vorteile der Erfindung ergeben sich aus der nachfolgenden Beschreibung zweier Ausführungsbeispiele in Verbindung mit den beigefügten Zeichnungen. In diesen zeigen:
- Figur 1 eine schematische Teilschnittansicht eines erfindungsgemäßen Gassackmoduls gemäß einer ersten Ausführungsform der Erfindung;
- Figur 2 einen vergrößerten Ausschnitt aus Figur 1;
- Figur 3 einen vergrößerten Ausschnitt aus Figur 2;
- Figur 4 ein Detail der Verbindung eines ersten Rastelements mit dem Generatorträger eines Gassackmoduls gemäß einer zweiten Ausführungsform der Erfindung in einer Schnittansicht;
- Figur 5 eine schematische Teilschnittansicht eines erfindungsgemäßen Gassackmoduls gemäß einer dritten Ausführungsform und
- Figur 6 einen Schnitt durch das Modul längs der Linie VI-VI in Figur 5.

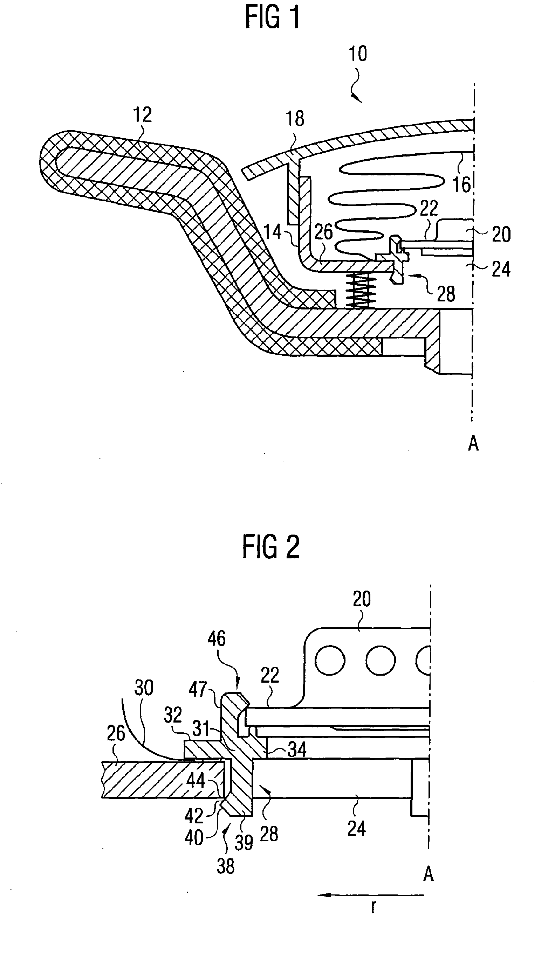

In Figur 1 ist ein Gassackmodul 10 gemäß einer ersten Ausführungsform der Erfindung dargestellt, das in einem Lenkrad 12 aufgenommen ist. Es enthält einen in diesem Beispiel aus Kunststoff bestehenden Generatorträger 14, der eine Aufnahme bildet, in der ein Gassack 16 in gefaltetem Zustand aufgenommen ist. Nach außen, also in einem im Fahrzeug eingebauten Zustand in Richtung des Fahrzeuginnenraums gerichtet, ist das Gassackmodul 10 auf herkömmliche Weise durch eine Abdeckkappe 18 verschlossen. Das Gassackmodul 10 ist über bekannte, in Figur 1 angedeutete Befestigungsmittel an einem fahrzeugfesten Teil, z.B. einem Lenkradskelett, befestigt.

Das Generatorträger 14 könnte genauso gut plattenförmig ausgebildet sein, und die Seitenwände der Aufnahme könnten durch andere Bauteile des Lenkrads oder des Gassackmoduls gebildet sein.

Das Gassackmodul 10 enthält außerdem einen Gasgenerator 20, der von einem ringförmigen Flansch 22 umgeben ist und etwas oberhalb einer Öffnung 24 in einer Bodenplatte 26 des Generatorträgers 14 angeordnet ist. Der Gasgenerator 20 ist mittels eines vom Generatorträger 14 separaten Halterings 28, der im folgenden näher beschrieben wird, an der Bodenplatte 26 des Generatorträgers 14 befestigt.

Der Haltering 28 befestigt auch gleichzeitig einen Rand 30 einer Einblasöffnung des Gassacks 16 am Generatorträger 14.

Der Haltering 28 weist einen ringförmigen Abschnitt 31 auf Ein radial außen gelegener Teil des ringförmigen Abschnitts 31 bildet einen Klemmabschnitt 32 für die Fixierung des Randes 30 der Einblasöffnung des Gassacks 16. Der Rand 30 der Einblasöffnung des Gassacks 16 ist zwischen dem Klemmabschnitt 32 und der Bodenplatte 26 des Generatorträgers 14 gehalten.

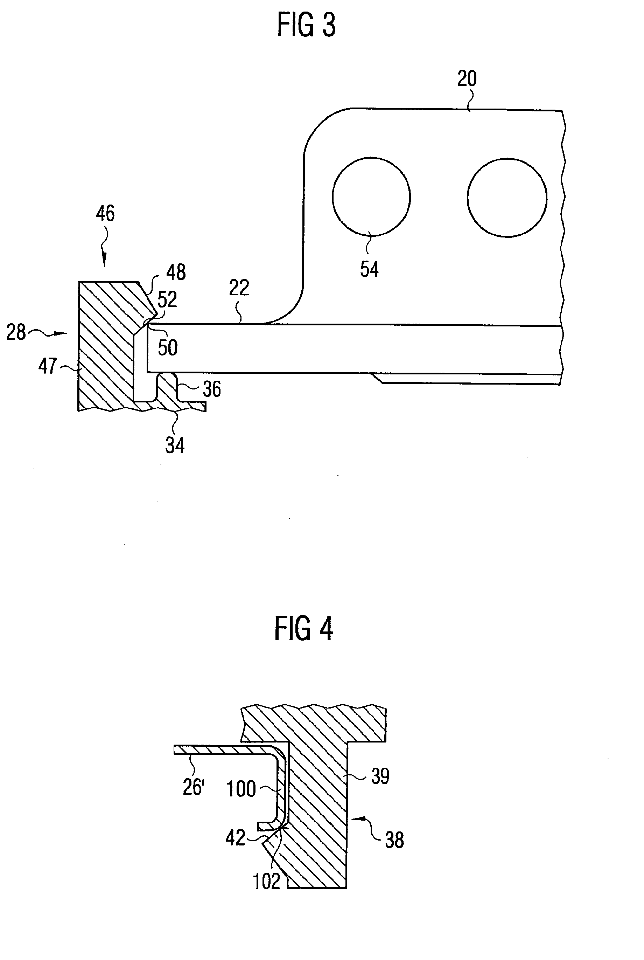

Ein radial innen gelegener Teil des ringförmigen Abschnitts bildet einen Auflageabschnitt 34. Am Auflageabschnitt 34 ist ein ringförmiger, umlaufender Vorsprung 36 ausgebildet, auf dem der Flansch 22 des Gasgenerators 20 abdichtend aufliegt (siehe Figur 3). Es könnten auch mehrere, voneinander getrennte Vorsprünge 36, die über den Umfang verteilt sind, vorgesehen sein. Der oder die Vorsprünge 36 dienen auch der Vorspannung in Axialrichtung A, denn sie werden bei Einrasten des Flansches 22 axial elastisch komprimiert.

Der Klemmabschnitt 32 und der Auflageabschnitt 34 sind einstückig miteinander verbunden.

In einer Axialrichtung A des Gassackmoduls 10 gesehen, also senkrecht zur Ebene des ringförmigen Abschnitts 31 des Halterings 28, gehen von diesem mehrere, hier vier, hakenförmig ausgebildete, einstückig mit dem Haltering 28 ausgebildete erste Rastelemente 38 aus, deren Arme 39 von einer Frontseite der Abdeckkappe 18 weg gerichtet sind. Die Arme 39 ersten Rastelemente 38 sind über einen geringen Winkelbereich in einer Radialrichtung r beweglich, um ein Einrasten an einem Rand der Öffnung 24 der Bodenplatte 26 zu ermöglichen. Hierzu trägt jedes erste Rastelement 38 am vom ringförmigen Abschnitt 31 weggerichteten Endes des Armes 39 eine abgeschrägte Gleitfläche 40.

Jedes der ersten Rastelemente 38 kontaktiert den Rand der Öffnung 24 über eine am Ende des Armes 39 ausgebildete, zum ringförmigen Abschnitt hin weisende, geneigte Anlagefläche 42, wobei eine Kante 44 des Randes der Öffnung 24 auf der Anlagefläche 42 aufliegt. Der Rand der Öffnung 24 ist also zwischen dem Klemmabschnitt 32 und der Anlagefläche 42 am ersten Rastelement 38 fixiert. Durch die Neigung der Anlagefläche ist sichergestellt, daß die Rastverbindung zwischen den ersten Rastelementen 38 und dem Rand der Öffnung 24 stets unter einer Vorspannung steht.

In die den ersten Rastelementen 38 entgegengesetzte Richtung erstrecken sich ausgehend vom ringförmigen Abschnitt 31 des Halterings 28 mehrere, hier vier, hakenförmige, einstückig mit dem Haltering 28 ausgebildete zweite Rastelemente 46. Über die zweiten Rastelemente 46 ist der Flansch 22 des Gasgenerators 20 mit dem Haltering 28 verbunden. Diese Rastverbindung ist näher in Figur 3 gezeigt.

Die zweiten Rastelemente 46 weisen jeweils am Ende eines Armes 47 eine vom ringförmigen Abschnitt 31 weg gerichtete abgeschrägte Gleitfläche 48 auf Die Arme 47 sind über einen geringen Winkelbereich in Radialrichtung r beweglich, so daß der Gasgenerator 20 in einer rein translatorischen Bewegung in der Axialrichtung A des Gassackmoduls in Richtung des ringförmigen Abschnitts 31 des Halterings 28 geschoben werden kann. Hierbei weichen die Arme 47 der zweiten Rastelemente 46 ein kleines Stück radial nach außen aus, bis sie den Flansch 22 umgreifen. Der Flansch 22 liegt dann auf dem oder den Vorsprüngen 36 des Auflageabschnitts 34 auf und ist zwischen diesem und der Anlagefläche 52 am zweiten Rastelement 46 fixiert.

Eine Kante 50 am Rand des Flansches 22 ist in Kontakt mit einer zum ringförmigen Abschnitt 31 hin gerichteten abgeschrägten Anlagefläche 52, die am Ende des Armes 47 jedes zweiten Rastelements 46 ausgebildet ist. Durch diese Maßnahme ist sichergestellt, daß der Flansch 22 stets mit einer Vorspannung zwischen der Anlagefläche 52 und dem Vorsprung 36 gehalten ist.

Die ersten Rastelemente 38 liegen radial inwärts der zweiten Rastelemente 46. Der Rand des Flansches 22 des Gasgenerators 20 liegt radial inwärts des Klemmabschnitts 32.

In der Axialrichtung A gesehen liegen der Flansch 22 des Gasgenerators 20, der Klemmabschnitt 32 des Halterings 28, der Rand 30 der Einströmöffnung des Gassacks 16 sowie die Bodenplatte 26 des Generatorträgers 14 hintereinander. Dies führt dazu, daß bei der Aktivierung des Gasgenerators 20 der Impuls, der durch das aus Ausströmöffnungen 54 austretende Gas erzeugt wird, über den Auflageabschnitt 34 und den Klemmabschnitt 32 auf den Rand 30 des Gassacks 16 und die Bodenplatte 26 übertragen wird. Hierdurch wird genau in dem Moment, in dem eine feste Fixierung des Gassacks 16 notwendig ist, die Klemmwirkung zwischen dem Haltering 28 und dem Generatorträger 14 erhöht.

Es wäre auch möglich, den Rand 30 der Einströmöffnung des Gassacks 16 mit Öffnungen zu versehen, durch die die Arme 39 der ersten Rastelemente 38 hindurchragen, um so den Gassack 16 zusätzlich zu fixieren.

Bei der Montage des Gassackmoduls 10 wird zunächst der Gasgenerator 20 in einer rein translatorischen Relativbewegung zum Haltering 28 an diesem verrastet. Anschließend wird die Baugruppe aus Gasgenerator 20 und Haltering 28 durch die Einströmöffnung in den Gassack 16 eingebracht, und die so gebildete Baugruppe wird in das Generatorträger 14 eingesetzt. Hierzu werden in einer rein translatorischen Bewegung die Arme 39 der ersten Rastelemente 38 in Axialrichtung A in die Öffnung 24 hineingeschoben, bis die Anlageflächen 42 mit dem Rand der Bodenplatte 26 in Eingriff sind. Um die Lage des Randes 30 der Einströmöffnung des Gassacks 16 bei der Montage eindeutig festzulegen, besteht zwischen dem Haltering 28 und der Bodenplatte 26 eine gewisse Vorspannung.

Der gesamte Haltering 28 kann aus Metall oder einem geeigneten Kunststoff bestehen.

In einer zweiten Ausführungsform der Erfindung ist im Unterschied zur ersten Ausführungsform die Bodenplatte 26' des Generatorträgers 14 aus einem relativ dünnen Metallblech gebildet. Hier sind im Bereich der ersten Rastelemente 38 Abschnitte vorgesehen, in denen das Material des Randes der Öffnung 24 der Bodenplatte 26' so umgebogen sind, daß zum ersten Rastelement 38 komplementäre Anlageflächen 100 geschaffen sind. Ein Rand 102 der Anlagefläche 100 ist auch hier in Kontakt mit der abgeschrägten Anlagefläche 42 der ersten Rastelemente 38, so daß auch hier eine Vorspannung zwischen jedem ersten Rastelement 38 und der Bodenplatte 26' besteht.

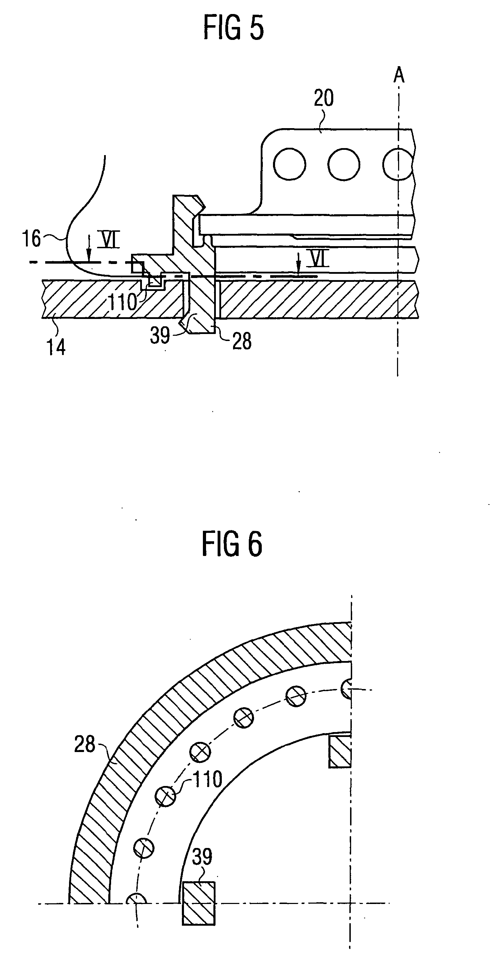

Bei der Ausführungsform nach Figur 5 ist der Gassack 16 zwischen dem Haltering 28 und dem Generatorträger 14 angeordnet. Der Haltering 28 hat auf seiner Unterseite zahlreiche Vorsprünge 110, die in entsprechende Öffnungen im Gassack 16 ragen und eine eindeutige Lagebestimmung des Gassacks 16 ermöglichen.

Beim Aktivieren des Gasgenerators 20 werden dieser und der Haltering 28 aufgrund des Druckes im Gassack und des Schubes des Gasgenerators nach unten gedrückt, so daß der Gassack 16 zusätzlich zum Formschluß auch zwischen Haltering 28 und Generatorträger 14 geklemmt wird.

## Patentansprüche

1. Gassackmodul
mit einem Gassack (16),
einem Gasgenerator (20),
einem Haltering (28) und
einem Generatorträger (14), an dem der Gassack (16) und der Gasgenerator (20) mittels des Halterings (28) befestigt sind,
wobei der Haltering (28) wenigstens ein erstes Rastelement (38) aufweist zur Schaffung einer Rastverbindung zwischen Haltering (28) und Generatorträger (14),
und wenigstens ein zweites Rastelement (46) zur Schaffung einer Rastverbindung zwischen Gasgenerator (20) und Haltering (28).

2. Gassackmodul nach Anspruch 1, **dadurch gekennzeichnet, daß** der Haltering (28) einen Klemmabschnitt (32) aufweist und ein Rand (30) einer Einströmöffnung des Gassacks (16) zwischen dem Klemmabschnitt (32) und dem Generatorträger (14) liegt.

3. Gassackmodul nach Anspruch 2, **dadurch gekennzeichnet, daß** in einer Axialrichtung (A) des Gassackmoduls (10) gesehen ein Flansch (22) des Gasgenerators (20), der Klemmabschnitt (32), der Rand (30) der Einströmöffnung sowie ein Abschnitt des Generatorträgers (14) hintereinander angeordnet sind.

4. Gassackmodul nach einem der vorhergehenden Ansprüche **dadurch gekennzeichnet, daß** ein Rand eines Flansches (22) des Gasgenerators (20) radial einwärts eines Klemmabschnitts (32) des Halterings (28) liegt.

5. Gassackmodul nach einem der vorhergehenden Ansprüche, **dadurch gekennzeichnet, daß** der Gasgenerator (20) vom Haltering (28) umgeben ist.

6. Gassackmodul nach einem der vorhergehenden Ansprüche, **dadurch gekennzeichnet, daß** das zweite Rastelement (46) am Rand eines Flansches (22) des Gasgenerators (20) angreift.

7. Gassackmodul nach einem der vorhergehenden Ansprüche, **dadurch gekennzeichnet, daß** das erste und/oder das zweite Rastelement (38, 46) als Haken ausgebildet ist/sind.

8. Gassackmodul nach einem der vorhergehenden Ansprüche, **dadurch gekennzeichnet, daß** das erste und/oder das zweite Rastelement (38, 46) einstückig mit dem Haltering (28) ausgeführt ist/sind.

9. Gassackmodul nach einem der vorhergehenden Ansprüche, **dadurch gekennzeichnet, daß** das erste Rastelement (38) eine abgeschrägte Anlagefläche (42) aufweist, an der der Generatorträger (14) im montierten Zustand anliegt.

10. Gassackmodul nach einem der vorhergehenden Ansprüche, **dadurch gekennzeichnet, daß** das zweite Rastelement (46) eine abgeschrägte Anlagefläche (52) aufweist, an der der Gasgenerator (20) im montierten Zustand anliegt.

11. Gassackmodul nach einem der vorhergehenden Ansprüche, **dadurch gekennzeichnet, daß** der Haltering (28) in einer Öffnung (24) im Generatorträger (14) angeordnet und von einem Rand der Öffnung (24) umgeben ist, wobei das erste Rastelement (38) am Rand der Öffnung (24) angreift.

12. Gassackmodul nach einem der vorhergehenden Ansprüche, **dadurch gekennzeichnet, daß** der Generatorträger (14) ein Gehäuse mit einer Bodenplatte (26; 26') ist.

13. Gassackmodul nach Anspruch 12, **dadurch gekennzeichnet, daß** die Bodenplatte (26') im Bereich des Gasgenerators (20) mit einer Öffnung (24) versehen ist und daß ein Rand der Öffnung (24) wenigstens abschnittsweise umgebogen ist, so daß eine zum ersten Rastelement (38) komplementäre Anlagefläche (100) geschaffen ist.
